Europäisches Patentamt

European Patent Office

Office européen des brevets

(11) Veröffentlichungsnummer: **0 180 731**
**B1**

(12) # EUROPÄISCHE PATENTSCHRIFT

(45) Veröffentlichungstag der Patentschrift:
**17.11.88**

(51) Int. Cl.⁴: **B 23 B 31/00**

(21) Anmeldenummer: **85110789.6**

(22) Anmeldetag: **28.08.85**

(54) **Kraftbetätigtes Spannfutter.**

(30) Priorität: **27.10.84 DE 3439402**

(43) Veröffentlichungstag der Anmeldung:
**14.05.86 Patentblatt 86/20**

(45) Bekanntmachung des Hinweises auf die Patenterteilung:
**17.11.88 Patentblatt 88/46**

(84) Benannte Vertragsstaaten:
**CH FR GB IT LI SE**

(56) Entgegenhaltungen:
**EP - A - 0 079 131**
**EP - A - 0 108 857**
**DE - A - 2 236 651**

(73) Patentinhaber: **Röhm, Günter Horst,
Heinrich-Röhm-Strasse 50, D-7927 Sontheim (DE)**

(72) Erfinder: **Röhm, Günter Horst,
Heinrich-Röhm-Strasse 50, D-7927 Sontheim (DE)**

(74) Vertreter: **Fay, Hermann, Dipl.-Phys. Dr. et al,
Ensingerstrasse 21 Postfach 1767, D-7900 Ulm (Donau)
(DE)**

## Beschreibung

Die Erfindung betrifft ein Spannfutter mit einer Anordnung zur Erfassung der Spannkraft bei einem umlaufenden kraftbetätigten Spannfutter, das radial im Futterkörper geführte und durch ein im Futterkörper befindliches Antriebsglied verstellbare Spannbacken aufweist, mit einem im Kraftschluss zwischen dem Antriebsglied und mindestens einer der Spannbacken angeordneten, ein der Grösse dieses Kraftflusses proportionales elektrisches Spannkraftsignal erzeugenden Spannkraft-Messaufnehmer, und mit einer Signalübertragungseinrichtung vom Spannfutter auf eine stationäre Signalauswerteeinrichtung, wobei ein Fliehkraftgeber aus einem im Futterkörper angeordneten Fliehgewicht und einem dessen Fliehkraft erfassenden Fliehkraft-Messaufnehmer, dem ein einstellbarer Spannungsteiler zur Signalnormierung nachgeschaltet ist, ein der Fliehkraft proportionales elektrisches Fliehkraftsignal erzeugt und ein Subtrahierglied zur Ermittlung der an der Spannfläche der Spannbacke tatsächlich wirksamen Spannkraft das Spannkraftsignal und das normierte Fliehkraftsignal bei Aussenspannung voneinander subtrahiert.

Ein derartiges Spannfutter ist aus der EP-A-0 079 131 bekannt und ermöglicht es, die am Werkstück tatsächlich wirksame Spannkraft unbeeinflusst von an den Spannbacken angreifenden Fliehkräften zu erfassen. Das Fliehkraftsignal entspricht bei geeigneter Normierung der Fliehkraft, die an denjenigen Futterteilen wirksam ist, die im Kraftfluss zwischen der dem Werkstück anliegenden Spannfläche der Spannbacke und dem Ort des Spannkraft-Messaufnehmers liegen, und ist daher gleich dem Differenzbetrag zwischen der vom Spannkraft-Messaufnehmer ermittelten und der tatsächlich von der Spannbacke auf das Werkstück übertragenen Kraft. Der Ausgang des Subtrahiergliedes stellt somit unmittelbar eine Signalgrösse zur Verfügung, die der tatsächlich am Werkstück angreifenden Spannkraft entspricht. Der Fliehkraftgeber besteht bei der bekannten Anordnung aus einem Stab, der mit zur Futterachse paralleler Ausrichtung nur an beiden Enden im Futterkörper gehalten ist, so dass er sich unter der Wirkung der Fliehkraft durchbiegen kann, und einem am Stab angeordneten, seine Durchbiegung erfassenden Dehnungsmessstreifen. Das vom Dehnungsmessstreifen erzeugte Signal ist allein drehzahlabhängig und kann bezüglich anderer Parameter nicht variiert werden.

Aus der DE-A-22 36 651 ist ein Spannfutter bekannt, bei dem jeder Spannbacke zur Fliehkraftkompensation ein Fliehgewicht zugeordnet ist, das verstellbar an einem schwenkbar im Futterkörper gelagerten Hebel angeordnet ist, der die jeweilige Spannbacke entgegengerichtet zu der an ihr unmittelbar angreifenden Fliehkraft beaufschlagt. Die Schwenkachse des Hebels ist parallel zur Futterachse und der Hebel in tangentialer Richtung im Futterkörper ausgerichtet.

Der Erfindung liegt die Aufgabe zugrunde, eine Anordnung der eingangs genannten Art so auszubilden, dass die am Werkstück wirksame Spannkraft in einfacher Weise unabhängig von der radialen Stellung und der Masse der Spannbacken erfasst werden kann.

Diese Aufgabe wird nach der Erfindung dadurch gelöst, dass bei Innenspannung ein Addierglied anstelle des Subtrahierglieds das Spannkraftsignal und das normierte Fliehkraftsignal zueinander addiert, und dass das Fliehgewicht verstellbar an einem schwenkbar im Futterkörper gelagerten, den Fliehkraft-Messaufnehmer beaufschlagenden Hebel angeordnet ist, der in zur Futterachse im wesentlichen paralleler Richtung und dessen Schwenkachse senkrecht zur Futterachse verläuft.

Durch das Addierglied ist die Anordnung für Aussen- wie für Innenspannung gleich gut geeignet. Das Fliehgewicht im Fliehkraftgeber hat den Vorteil, dass die quadratische Abhängigkeit der Fliehkraft von der Winkelgeschwindigkeit bzw. Drehzahl des Spannfutters unmittelbar in die Bildung des Fliehkraftsignals eingeht. Die Verstellung des Fliehgewichts am Hebel kann unabhängig von der Anordnung des Fliehkraft-Messaufnehmers erfolgen und ermöglicht es, bei gleicher Drehzahl des Spannfutters die auf den Fliehkraft-Messaufnehmer wirkende Kraft zu variieren und so den messtechnisch erfassten Fliehkraftanteil bezüglich der radialen Lage und der Masse der Spannbacken zu verändern, bzw. zu normieren.

Diese Änderung bzw. Normierung kann unmittelbar durch die Spannbacke selbst ausgeführt werden. Eine hierfür vorteilhafte Ausführungsform ist dadurch gekennzeichnet, dass ein parallel zur Futterachse verschiebbar geführter Verstellbolzen vorgesehen ist, dessen eines freies Ende zur Betätigung durch die Spannbacke aus der Futterstirnfläche vorsteht und dessen anderes Ende sich über eine Druckfeder am Futterkörper innenseitig abstützt, dass ferner der Verstellbolzen zwei Radialvorsprünge aufweist, zwischen die das Fliehgewicht des Hebels unter Formschluss vorsteht, wobei der Verstellbolzen mit seinem freien Ende unter der Kraft der Druckfeder einem an der Spannbacke vorgesehenen Anschlag anliegt. Auf diese Weise wird durch die axiale Verschiebung des Verstellbolzens das Fliehgewicht auf dem Hebel verschoben. Es besteht aber auch die Möglichkeit, dass ein zur Futterachse paralleler, aus der Futterstirnfläche vorstehender, durch einen an der Spannbacke angeordneten Anschlag axial verschiebbarer Verstellstift vorgesehen ist, der einen linearen Weggeber, wie Potentiometer, induktiven Weggeber oder dergl. betätigt, der dem Fliehkraft-Messaufnehmer zur Normierung des Fliehkraftsignals nachgeschaltet ist. Dabei kann es sich zur Berücksichtigung der radialen Lage der Spannbacke empfehlen, dass der Anschlag eine in Verstellrichtung der Spannbacke verlaufende Steuerkulisse für den Verstellbolzen bzw. -stift bildet. Wegen der linearen Abhängigkeit der Fliehkraft von der radialen Lage der Spannbacke kann die Steuerkulisse gegenüber der Futterstirnfläche keilförmig verlaufen. Weiter ist es von Vorteil, wenn bei geteilt ausgebildeten,

aus Grund- und Aufsatzbacke bestehenden Spannbacken der Anschlag an der Aufsatzbacke vorgesehen ist, da dann durch entsprechende Anordnung des Anschlags die jeweilige Masse der verschiedenen Aufsatzbacken berücksichtigt werden kann. Dies ist insbesondere dadurch möglich, dass der Abstand der Steuerkulisse von der Futterstirnfläche abhängig von der Form und Masse der Aufsatzbacke ist.

Um die Signalübertragung vom Spannfutter zur stationären Signalsauswerteeinrichtung einfach zu gestalten, empfiehlt es sich, dass das Subtrahier- bzw. Addierglied von einer im Futterkörper angeordneten Operationsverstärkerschaltung gebildet ist. Damit müssen nicht die ohnehin sehr kleinen Messignale der Messaufnehmer, sondern nur die bereits aufbereiteten und in der Regel auch schon verstärkten Signalgrössen übertragen werden. Eine besonders störungsfreie Signalübertragung ist insbesondere dann gegeben, wenn der Operationsverstärkerschaltung ein Spannungs-Frequenz-Wandler nachgeschaltet ist, dessen Ausgangssignal einem am Spannfutter angeordneten Geberteil der Signalübertragungseinrichtung zugeführt wird.

Die Messaufnehmer können, abhängig von ihrem jeweiligen Anbringungsort, hinsichtlich ihres Messprinzips beliebig gestaltet sein. In der Regel wird es jedoch vorteilhaft sein, wenn der Spannkraft- und Fliehkraft-Messaufnehmer als eine von der Kraft bewirkte Längenveränderung erfassender Wegaufnehmer ausgebildet ist. Insbesondere empfiehlt es sich, dass der Wegaufnehmer von Dehnungsmessstreifen gebildet ist. Bei geteilt ausgebildeten und durch ein Kupplungsstück lös- und versetzbar miteinander verbundenen Spannbacken kann zweckmässigerweise der Spannkraft-Messaufnehmer den Kraftfluss am Kupplungsstück erfassen. Dabei kann der Spannkraft-Messaufnehmer in einer Ausnehmung an der Mantelfläche des Kupplungsstücks angeordnet sein.

Schliesslich besteht die Möglichkeit, dass die Signalauswerteeinrichtung ein die tatsächliche Spannkraft an der Spannbacke wiedergebendes Signal bildet und zur Verwendung bei der Steuerung der das Spannfutter antreibenden Drehmaschine zur Verfügung stellt.

Im folgenden wird die Erfindung anhand von in der Zeichnung dargestellten Ausführungsbeispielen näher erläutert; es zeigen:

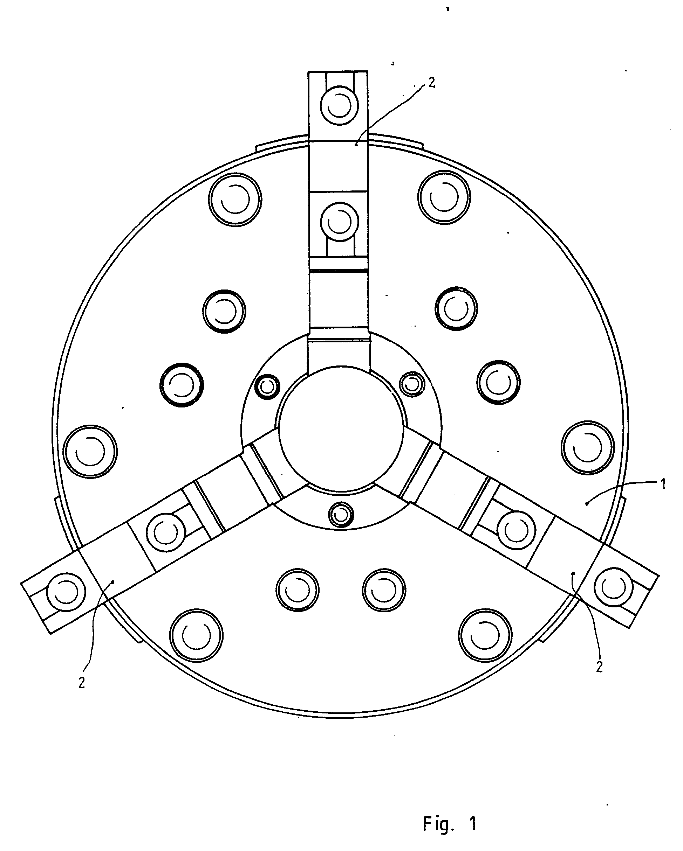

Fig. 1 ein Spannfutter mit der erfindungsgemässen Anordnung in stirnseitiger Ansicht,

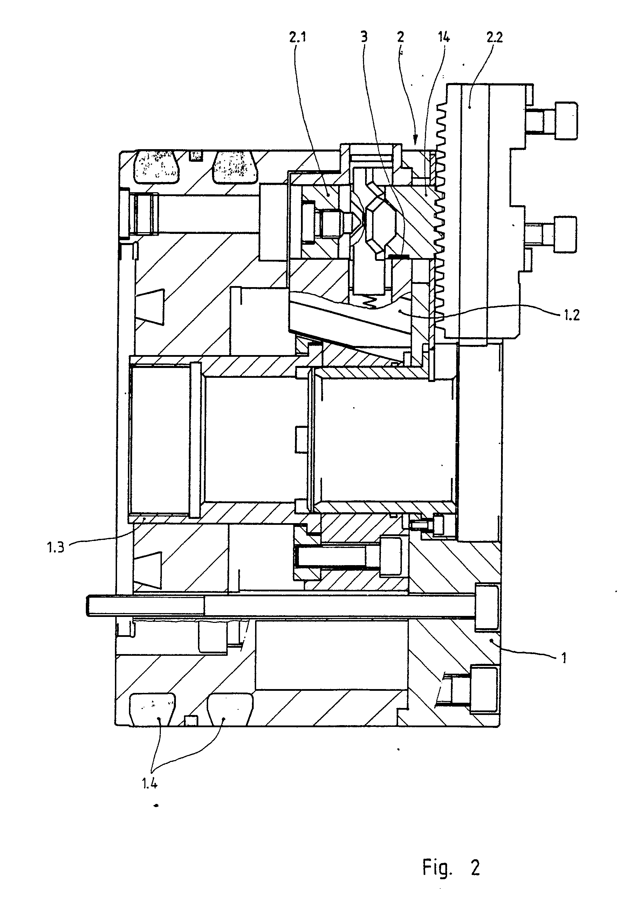

Fig. 2 den Gegenstand nach Fig. 1 im Axialschnitt,

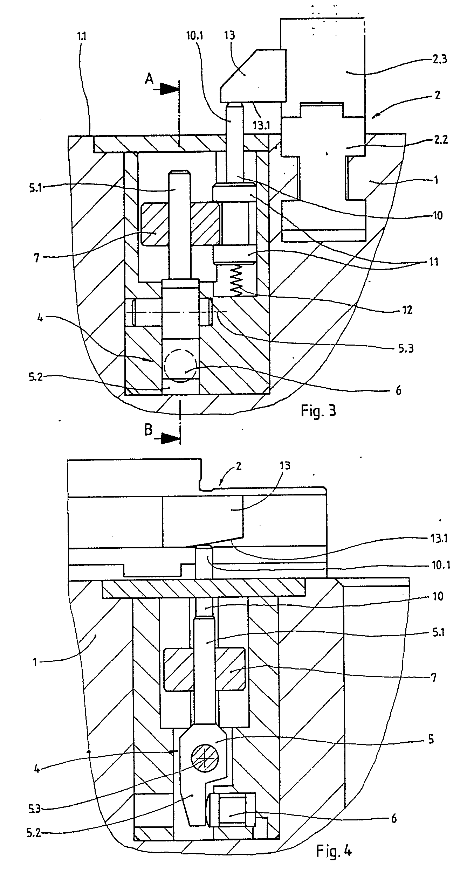

Fig. 3 einen zur Futterachse parallelen Teilschnitt durch das Spannfutter nach Fig. 1,
Fig. 4 einen Schnitt längs der Linie A–B durch den Gegenstand nach Fig. 4,
Fig. 5 einen Schnitt durch eine geteilt ausgebildete Spannbacke mit am Kupplungsstück angebrachtem Spannkraft-Messaufnehmer,
Fig. 6 den Gegenstand nach Fig. 5 in einer anderen Ausführungsform,

Fig. 7 eine schematische Schaltungsanordnung zur Fliehkraftkompensation.

In der Zeichnung sind der Futterkörper des Spannfutters allgemein mit 1 und die darin radial verstellbar geführten Spannbacken mit 2 bezeichnet. Ein solches Futter besitzt in der Regel drei Spannbacken 2, die zu ihrer radialen Verstellung beispielsweise über Keilhaken 1,2 mit einem Antriebsglied 1,3 in kraft- und formschlüssigem Eingriff stehen. Eine axiale Verstellung des Antriebsgliedes 1,3 bewirkt eine radiale Verstellung der Spannbacken 2. Das Antriebsglied 1,3 kann in üblicher und daher hier nicht näher zu beschreibender Weise durch einen Spannzylinder betätigt werden, dessen Spannkolben durch die hohle Drehmaschinenspindel hindurch über eine Zugstange oder ein Zugrohr mit dem Antriebsglied 1,3 verbunden sein kann.

Unabhängig von der speziellen Ausbildung des Spannfutters ist im Kraftschluss zwischen dem Antriebsglied 1,3 und der Spannbacke 2 ein Spannkraft-Messaufnehmer 3 angeordnet, der den Kraftfluss zwischen dem Antriebsglied 1,3 und der Spannbacke 2 erfasst. Schliesslich ist eine ebenfalls in der Zeichnung nicht näher dargestellte Signalübertragungseinrichtung vorgesehen, die aus einem Geberteil am Spannfutter, z.B. in Ringnuten 1,4 angeordneten Rotorspulen, und einer gegenüber dem Spannfutter stationären Signalauswerteeinrichtung besteht.

Der Futterkörper 1 ist mit einem Fliehkraftgeber 4 versehen, der von einem im Futterkörper 1 angeordneten Fliehgewicht 7 und einem dessen Fliehkraft erfassenden Fliehkraft-Messaufnehmer 6 gebildet ist, dem ein Potentiometer 20 nachgeschaltet ist. Das Fliehgewicht 7 ist verstellbar an einem schwenkbar im Futterkörper 1 gelagerten Hebel 5 angeordnet, der zweiarmig ausgebildet ist. Der eine Arm 5,1 trägt das in Längsrichtung des Hebels 5 verstellbare Fliehgewicht 7, während der andere Arm 5,2 den Fliehkraft-Messaufnehmer 6 beaufschlagt. Die Schwenkachse 5,3 des Hebels 5 verläuft senkrecht zur Futterachse 8 und der Hebel 5 in zur Futterachse 8 im wesentlichen paralleler Richtung. Das längs des Hebelarms 5,1 verschiebbare Fliehgewicht 7 ermöglicht es, die durch die Fliehkraft auf den Fliehkraft-Messaufnehmer ausgeübte Kraft in relativ weiten Grenzen zu variieren, wodurch eine Anpassung und Normierung des Ausgangssignals des Fliehkraft-Messaufnehmers 6 insbesondere bezüglich der radialen Stellung, der Form und der Masse der Spannbacken möglich ist.

Zur Verstellung des Fliehgewichtes 7 ist ein parallel zur Futterachse verschiebbar geführter Verstellbolzen 10 vorgesehen, dessen freies Ende 10,1 zur Betätigung durch die Spannbacke 2 aus der Futterstirnfläche 1,1 vorsteht. Der Verstellbolzen 10 weist zwei Radialvorsprünge 11 auf, zwischen die das Fliehgewicht 7 des Hebels 5 unter Formschluss vorsteht. Das andere Ende des Verstellbolzens 10 stützt sich über eine Druckfeder 12 am Futterkörper 1 innenseitig ab, wodurch der Verstellbolzen 10 mit seinem freien Ende 10,1 unter der Kraft der Druckfeder 12 einem an der Spannbacke 2 vorgesehenen Anschlag 13 anliegt. Die Anschlagfläche 13,1 des Anschlags 13 ist in Verstellrichtung der Spannbacke 2 als Steuerkulisse 13,1 ausgebildet, so dass bei radialer Verstellung der Spannbacke 2 der Verstellbolzen 10 und mit ihm das Fliehgewicht 7 axial verschoben wird. Wegen der linearen Abhängigkeit der Fliehkraft vom radialen Abstand kann die Steuerkulisse 13,1 in Verstellrichtung der Spannbacke 2 bezüglich der Futterstirnfläche 1,1 im wesentlichen keilförmig verlaufen. Bei geteilt ausgebildeten, aus Grundbacke 2,2 und Aufsatzbacke 2,3 bestehenden Spannbacken 2 ist der Anschlag 13 an der Aufsatzbacke 2,3 angeschlossen. Dadurch kann nicht nur die relative Lage der Aufsatzbacke 2,3 bei der Ermittlung der Fliehkraft berücksichtigt werden, vielmehr lässt sich die Aufsatzbacke 2,3 ohne weiteres auswechseln, wobei der jeweilige Anschlag 13 sowohl der Masse als auch der Form der Aufsatzbacke 2,3 Rechnung trägt. Dies geschieht dadurch, dass der Abstand der Steuerkulisse 13,1 an der Aufsatzbacke 2,3 von der Futterstirnfläche 1,1 abhängig von der Form und Masse der Aufsatzbacke 2,3 ist.

Es besteht jedoch auch die in der Zeichnung nicht näher dargestellte Möglichkeit, einen dem Verstellbolzen 10 entsprechenden Verstellstift vorzusehen, der einen linearen Weggeber beispielsweise in Form eines Potentiometers betätigt, dessen Ausgangssignal dann zur Normierung der Signalgrösse des Fliehkraftgebers 4 zu der des Spannkraft-Messaufnehmers 6 dient.

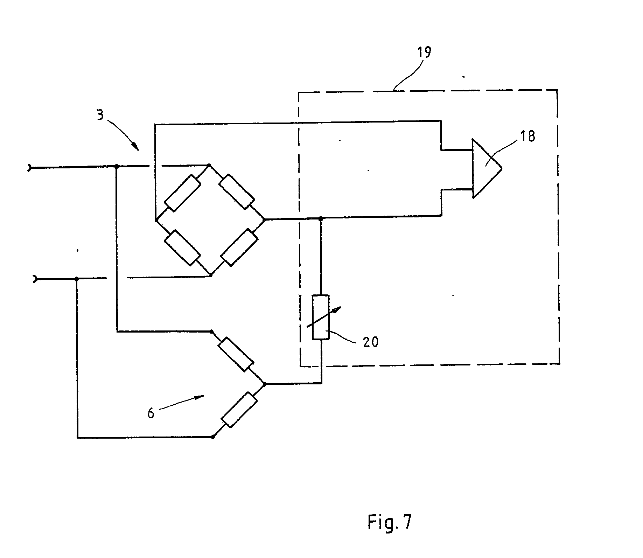

Zur Ermittlung der tatsächlichen, am Werkstück angreifenden Betriebsspannkraft ist ein in der Fig. 7 nur schematisch dargestelltes Subtrahier- bzw. Addierglied 19 vorgesehen, das das Signal des in einer Brückenschaltung angeordneten Spannkraft-Messaufnehmers 3 und das normierte, über das Potentiometer 20 angepasste Signal des Fliehkraft-Messaufnehmers 6 bei Aussenspannung des Futters voneinander subtrahiert bzw. bei Innenspannung zueinander addiert. Das Subtrahier- bzw. Addierglied 19 kann auch Teil eines entsprechend geschalteten Operationsverstärkers 18 sein, der im Futterkörper 1 angeordnet sein kann. Ein dem Operationsverstärker 18 gegebenenfalls nachgeschalteter, in der Zeichnung jedoch nicht dargestellter Spannungs-Frequenz-Wandler ermöglicht eine besonders einfache und störsichere Übertragung des Signals vom Geberteil am Spannfutter zur stationären Signalauswerteeinrichtung.

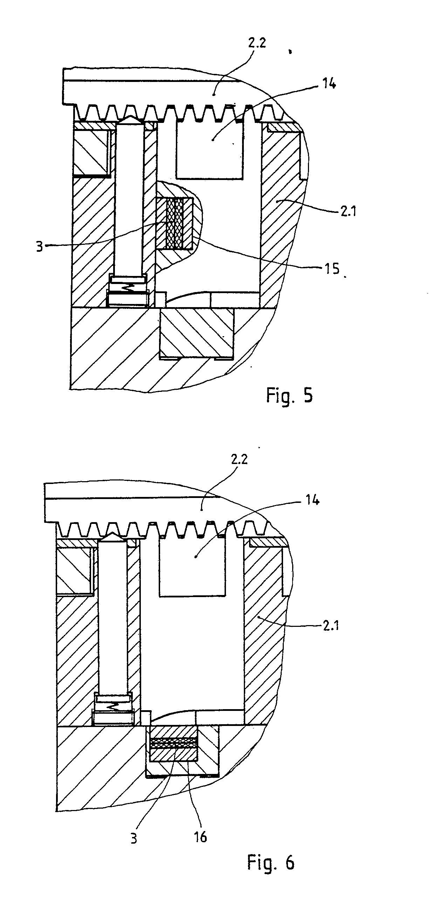

Der Spannkraft-Messaufnehmer 3 ist in nicht näher dargestellter Weise als ein eine Längenveränderung erfassender Wegaufnehmer in Form eines Dehnungsmessstreifens ausgebildet. Bei geteilt ausgebildeten Spannbacken 2, bei denen die Führungsbacke 2,1 und die Grundbacke 2,2 über ein beispielsweise als Verzahnungsbolzen ausgebildetes Kupplungsstück 14 auskuppelbar und formschlüssig miteinander verbunden sind, ist der Spannkraft-Messaufnehmer 3 gemäss Fig. 5 und 6 am Kupplungsstück 14 angeordnet. Dabei kann der Spannkraft-Messaufnehmer 3 gemäss Fig. 5 und 6 am Kupplungsstück 14 angeordnet. Dabei kann der Spannkraft-Messaufnehmer 3 gemäss Fig. 5 in einer Ausnehmung 15 an der Mantelfläche des Kupplungsstücks 14 angeordnet sein. Ebenso besteht jedoch die in Fig. 6 gezeigte Möglichkeit, den Spannkraft-Messaufnehmer 3 in einer Ausnehmung 16 des das Kupplungsstück 14 in axialer Richtung verstellenden Stellrings 17 anzuordnen, dem das Kupplungsstück 14 stirnseitig anliegt.

Das vom Geberteil zur stationären Signalauswerteeinrichtung übertragene, die tatsächlich am Werkstück auftretende Betriebsspannkraft wiedergebende Signal kann schliesslich in nicht näher dargestellter Weise zur Verwendung bei der Steuerung der das Spannfutter antreibenden Drehmaschine zur Verfügung stehen. Derart registrierte Änderungen der Spannkraft, insbesondere deren Absinken unter einen vorgegebenen Wert, können dazu verwendet werden, auf einen erforderlichen Werkzeugwechsel hinzuweisen oder auch die Maschine stillzusetzen. Ebenso kann auf die Höhe der vom Spannzylinder aufgebrachten Spannkraft korrigierend Einfluss genommen werden.

**Patentansprüche**

1. Spannfutter mit einer Anordnung zur Erfassung der Spannkraft bei umlaufendem kraftbetätigten Spannfutter, das radial im Futterkörper (1) geführte und durch ein im Futterkörper (1) befindliches Antriebsglied verstellbare Spannbakken (2) aufweist, mit einem im Kraftschluss zwischen dem Antriebsglied (1,3) und mindestens einer der Spannbacken (2) angeordneten, ein der Grösse dieses Kraftflusses proportionales elektrisches Spannkraftsignal erzeugenden Spannkraft-Messaufnehmer (3), und mit einer Signalübertragungseinrichtung vom Spannfutter auf eine stationäre Signalauswerteeinrichtung, wobei ein Fliehkraftgeber (4) aus einem im Futterkörper angeordneten Fliehgewicht (7) und einem dessen Fliehkraft erfassenden Fliehkraft-Messaufnehmer (6), dem ein einstellbarer Spannungsteiler zur Signalnormierung nachgeschaltet ist, ein der Fliehkraft proportionales elektrisches Fliehkraftsignal erzeugt und ein Subtrahierglied (19) zur Ermittlung der an der Spannfläche der Spannbacke (2) tatsächlich wirksamen Spannkraft das Spannkraftsignal und das normierte Fliehkraftsignal bei Aussenspannung voneinander subtrahiert, dadurch gekennzeichnet, dass bei Innenspannung ein Addierglied anstelle des Subtrahierglieds das Spannkraftsignal und das normierte Fliehkraftsignal zueinander addiert, und dass das Fliehgewicht (7) verstellbar an einem schwenkbar im Futterkörper gelagerten, den Fliehkraft-Messaufnehmer (6) beaufschlagenden Hebel (5) angeordnet ist, der in zur Futterachse (8) im wesentlichen paralleler Richtung und dessen Schwenkachse (5,3) senkrecht zur Futterachse (8) verläuft.

2. Spannfutter nach Anspruch 1, dadurch gekennzeichnet, dass ein parallel zur Futterachse (8) verschiebbar geführter Verstellbolzen (10) vorgesehen ist, dessen eines freies Ende (10,1)

zur Betätigung durch die Spannbacke (2) aus der Futterstirnfläche (1,1) vorsteht und dessen anderes Ende sich über eine Druckfeder (12) am Futterkörper (1) innenseitig abstützt, dass ferner der Verstellbolzen (10) zwei Radialvorsprünge (11) aufweist, zwischen die das Fliehgewicht (7) des Hebels (5) unter Formschluss vorsteht, wobei der Verstellbolzen (10) mit seinem freien Ende (10,1) unter der Kraft der Druckfeder (12) einem an der Spannbacke (2) vorgesehenen Anschlag (13) anliegt.

3. Spannfutter nach Anspruch 1, dadurch gekennzeichnet, dass ein zur Futterachse (8) paralleler, aus der Futterstirnfläche (1,1) vorstehender, durch einen an der Spannbacke angeordneten Anschlag (13) axial verschiebbarer Verstellstift vorgesehen ist, der einen linearen Weggeber, wie Potentiometer, induktiven Weggeber oder dergl. betätigt, der dem Fliehkraft-Messaufnehmer (6) zur Normierung des Fliehkraftsignales nachgeschaltet ist.

4. Spannfutter nach Anspruch 2 oder 3, dadurch gekennzeichnet, dass der Anschlag (13) eine in Verstellrichtung der Spannbacke (2) verlaufende Steuerkulisse (13,1) für den Verstellbolzen (10) bzw. -stift bildet.

5. Spannfutter nach Anspruch 4, dadurch gekennzeichnet, dass die Steuerkulisse (13,1) gegenüber der Futterstirnfläche (1,1) keilförmig verläuft.

6. Spannfutter nach einem der Ansprüche 2 bis 5, dadurch gekennzeichnet, dass bei geteilt ausgebildeten, aus Grund- und Aufsatzbacke (2,2, 2,3) bestehenden Spannbacken (2) der Anschlag (13) an der Aufsatzbacke (2,3) vorgesehen ist.

7. Spannfutter nach Anspruch 6, dadurch gekennzeichnet, dass der Abstand der Steuerkulisse (13,1) von der Futterstirnfläche (1,1) abhängig von der Form und Masse der Aufsatzbacke ist.

8. Spannfutter nach einem der Ansprüche 1 bis 7, dadurch gekennzeichnet, dass das Subtrahierbzw. Addierglied (19) von einer im Futterkörper (1) angeordneten Operationsverstärkerschaltung (18) gebildet ist.

9. Spannfutter nach Anspruch 8, dadurch gekennzeichnet, dass der Operationsverstärkerschaltung (18) ein Spannungs-Frequenz-Wandler nachgeschaltet ist, dessen Ausgangssignal einem am Spannfutter angeordneten Geberteil der Signalübertragungseinrichtung zugeführt wird.

10. Spannfutter nach einem der Ansprüche 1 bis 9, dadurch gekennzeichnet, dass der Spannkraft- und der Fliehkraft-Messaufnehmer (3, 6) als ein eine von der Kraft bewirkte Längenveränderung erfassender Wegaufnehmer ausgebildet ist.

11. Spannfutter nach Anspruch 10, dadurch gekennzeichnet, dass der Wegaufnehmer von Dehnungsmessstreifen gebildet ist.

12. Spannfutter nach den Ansprüchen 1 bis 11, dadurch gekennzeichnet, dass bei geteilt ausgebildeten und durch ein Kupplungsstück (14) lösund versetzbar miteinander verbundenen Spannbacken (2) der Spannkraft-Messaufnehmer (3) den Kraftfluss am Kupplungsstück (14) erfasst.

13. Spannfutter nach Anspruch 12, dadurch gekennzeichnet, dass der Spannkraft-Messaufnehmer (3) in einer Ausnehmung an der Mantelfläche des Kupplungsstückes (14) angeordnet ist.

14. Spannfutter nach einem der Ansprüche 1 bis 13, dadurch gekennzeichnet, dass die Signalauswerteeinrichtung ein die tatsächliche Spannkraft an der Spannbacke (2) wiedergebendes Signal bildet und zur Verwendung bei der Steuerung der das Spannfutter antreibenden Drehmaschine zur Verfügung stellt.

**Revendications**

1. Mandrin de serrage comportant un système pour la détermination de l'effort de serrage d'un mandrin de serrage en rotation actionné par une source d'énergie extérieure lequel comprend des mâchoires de serrage (2) guidées radialement dans le corps de mandrin (1) et pouvant être déplacées par un organe de commande disposé dans le corps de mandrin (1), avec un capteur de mesure d'efforts de serrage (3) maintenu par adhérence entre l'organe de commande (1,3) et au moins l'une des mâchoires de serrage (2) et fournissant un signal électrique d'effort de serrage proportionnel à la valeur de ce flux de forces, et avec un dispositif pour la transmission des signaux du mandrin de serrage à un système d'interprétation de signaux stationnaire, un capteur de forces centrifuges (4) qui est composé d'une masselotte (7) disposée dans le corps de mandrin et d'un capteur de mesure des forces centrifuges (6) enregistrant la force centrifuge de ladite masselotte et en aval duquel est monté un diviseur de tension pour la normalisation des signaux, générant un signal électrique de force centrifuge proportionnel à la force centrifuge, et un élément de soustraction (19) pour la détermination de l'effort de serrage réellement efficace sur la surface de la mâchoire de serrage (2) effectuant la soustraction du signal d'effort de serrage et du signal de force centrifuge normalisé en cas de tension extérieure, caractérisé par le fait que, en cas de serrage intérieur, un élément d'addition à la place de l'élément de soustraction effectue l'addition du signal d'effort de serrage et du signal de force centrifuge normalisé, et que la masselotte (7) est disposée de manière réglable sur un levier pivotant (5) monté dans le corps de mandrin et agissant sur le capteur de mesure des forces centrifuges (6), lequel levier s'étend sensiblement parallèlement à l'axe (8) du mandrin et son axe de pivotement (5,3) perpendiculairement à l'axe (8) du mandrin.

2. Mandrin de serrage selon la revendication 1, caractérisé par le fait qu'il est prévu un boulon de réglage (10) mobile guidé parallèlement à l'axe (8) du mandrin et dont l'extrémité libre (10,1) dépasse, pour l'actionnement par la mâchoire de serrage (2), de la face frontale (1,1) du mandrin, tandis que l'autre extrémité s'appuie, à l'intérieur, par l'intermédiaire d'un ressort de pression (12), contre le corps de mandrin (1); qu'en plus, le boulon de réglage (10) présente deux saillies radiales (11) entre lesquelles la masselotte (7) du levier (5) dépasse avec engagement positif, le boulon de réglage (10) étant appliqué avec son extrémité libre (10,1), sous l'action du ressort de pression (12), contre une butée (13) prévue sur la mâchoire de serrage (2).

3. Mandrin de serrage selon la revendication 1, caractérisé par le fait qu'il comprend une tige de réglage orientée parallèlement à l'axe (8) du mandrin, dépassant de la face frontale (1,1) du mandrin et pouvant être déplacée axialement par une butée (13) placée sur la mâchoire de serrage, ladite tige de réglage actionnant un capteur de déplacement linéaire, par exemple un potentiomètre, un capteur de déplacement inductif ou un élément analogue, qui est monté en aval du capteur de mesure des forces centrifuges (6) pour la normalisation du signal de force centrifuge.

4. Mandrin de serrage selon l'une des revendications 2 ou 3, caractérisé par le fait que la butée (13) constitue une coulisse de commande (13,1) pour le boulon de réglage (10) et respectivement la tige de réglage qui s'étend dans la direction de déplacement de la mâchoire de serrage (2).

5. Mandrin de serrage selon la revendication 4, caractérisé par le fait que la coulisse de commande (13,1) présente une forme de clavette par rapport à la face frontale (1,1) du mandrin.

6. Mandrin de serrage selon l'une quelconque des revendications 2 à 5, caractérisé par le fait que, pour des mâchoires de serrage (2) divisées, composées d'une mâchoire de base et d'un mors rapporté (2,2, 2,3), la butée (13) est prévue sur le mors rapporté (2,3).

7. Mandrin de serrage selon la revendication 6, caractérisé par le fait que la distance entre la coulisse de commande (13,1) et la face frontale (1,1) du mandrin dépend de la forme et de la masse du mors rapporté.

8. Mandrin de serrage selon l'une quelconque des revendications 1 à 7, caractérisé par le fait que l'élément de soustraction et respectivement d'addition (19) est constitué par un circuit d'amplificateur opérationnel (18) disposé dans le corps de mandrin (1).

9. Mandrin de serrage selon la revendication 8, caractérisé par le fait que le circuit d'amplificateur opérationnel (18) est suivi d'un convertisseur tension-fréquence dont le signal de sortie est envoyé à un élément transmetteur du système de transmission des signaux monté sur le mandrin de serrage.

10. Mandrin de serrage selon l'une quelconque des revendications 1 à 9, caractérisé par le fait que le capteur de mesure d'efforts de serrage et le capteur de mesure des forces centrifuges (3, 6) sont conformés en capteur de déplacement enregistrant une variation de longueur provoquée par la force.

11. Mandrin de serrage selon la revendication 10, caractérisé par le fait que le capteur de déplacement est constitué par des jauges extensométriques.

12. Mandrin de serrage selon l'une quelconque des revendications 1 à 11, caractérisé par le fait que, pour des mâchoires de serrage (2) divisées et assemblées de manière amovible et déplaçable par un organe d'accouplement (14), le capteur de mesure d'efforts de serrage (3) détermine le flux de forces sur l'organe d'accouplement (14).

13. Mandrin de serrage selon la revendication 12, caractérisé par le fait que le capteur de mesure d'efforts de serrage (3) est disposé dans un évidement prévu dans la surface d'enveloppe de l'organe d'accouplement (14).

14. Mandrin de serrage selon l'une quelconque des revendications 1 à 13, caractérisé par le fait que le système d'interprétation des signaux forme un signal reproduisant l'effort de serrage réellement appliqué à la mâchoire de serrage (2), lequel signal est alors disponible pour la commande de la machine tournante entraînant le mandrin de serrage.

**Claims**

1. A chuck having an arrangement for detecting the clamping force when the power-operated chuck is rotating, the chuck comprising clamping jaws (2) which are guided radially in the chuck body (1) and which are displaceable by a drive member disposed in the chuck body (1), comprising a clamping force measuring pick-up (3) which is arranged in the line of force between the drive member (1.3) and at least one of the clamping jaws (2) and which produces an electrical clamping force signal which is proportional to the magnitude of that flow of force, and comprising a signal transmitting means for transmitting signals from the chuck to a stationary signal evaluation means, wherein a centrifugal force generator (4) comprising a fly weight (7) arranged in the chuck body and a centrifugal force measuring pick-up (6) which detects the centrifugal force of the fly weight and which has connected on its output side an adjustable voltage divider for signal normalisation, produces an electrical centrifugal force signal which is proportional to the centrifugal force, and a subtracting member (19), for determining the clamping force which is actually effective at the clamping surface of the clamping jaw (2) subtracts the clamping force signal and the normalised centrifugal force signal from each other in an external clamping condition, characterised in that in an internal clamping condition, instead of a subtracting member, an adding member adds the clamping force signal and the normalised centrifugal force signal to each other, and that the fly weight (7) is arranged displaceably on a lever (5) which is mounted pivotably in the chuck body and which acts on the centrifugal force measuring pick-up (6) and which extends in a direction substantially parallel to the chuck axis (8), the pivot axis (5.3) of the lever (5) being parallel to the chuck axis (8).

2. A chuck according to claim 1 characterised in that there is provided a displacement pin (10) which is guided slidably parallel to the chuck axis (8) and of which one free end (10.1) projects out of the end face (1.1) of the chuck for actuation by the clamping jaw (2) and the other end bears against the chuck body (1) at the inside by way of a compression spring (12), that the displacement pin (10) also has two radial projections (11) between which the fly weight (7) of the lever (5) projects, in positive engagement therewith, wherein the displacement pin (10) bears with its free end (10.1) against an abutment (13) provided on the clamping jaw (2), under the force of the compression spring (12).

3. A chuck according to claim 1 characterised in that there is provided a displacement pin member which is parallel to the chuck axis (8) and which projects out of the end face (1.1) of the chuck and which is axially displaceable by an abutment (13) disposed on the clamping jaw and which actuates a linear displacement sensor such as a potentiometer, inductive displacement sensor or the like, which is disposed on the output side of the centrifugal force measuring pick-up (6) for normalisation of the centrifugal force signal.

4. A chuck according to claim 2 or claim 3 characterised in that the abutment (13) forms a control arm (13.1), which extends in the direction of displacement of the clamping jaw (2), for the displacement pin (10) or the displacement pin member respectively.

5. A chuck according to claim 4 characterised in that the control arm (13.1) extends in a tapering configuration relative to the end face (1.1) of the chuck.

6. A chuck according to one of claims 2 to 5 characterised in that, the clamping jaws (2) being of a split configuration and comprising main and attachment jaws 2.2, 2.3), the abutment (13) is provided on the attachment jaw (2.3).

7. A chuck according to claim 6 characterised in that the spacing of the control arm (13.1) from the end face (1.1) of the chuck is dependent on the shape and the mass of the attachment jaw.

8. A chuck according to one of claims 1 to 7 characterised in that the subtracting or adding member (19) is formed by an operational amplifier circuit (18) arranged in the chuck body (1).

9. A chuck according to claim 8 characterised in that connected on the output side of the operational amplifier circuit (18) is a voltage-frequency converter whose output signal is fed to a transmitter portion, which is disposed on the chuck, of the signal transmitting means.

10. A chuck according to one of claims 1 to 9 characterised in that the clamping force and centrifugal force measuring pick-up (3, 6) is in the form of a travel pick-up for sensing the variation in length produced by the force.

11. A chuck according to claim 10 characterised in that the travel pick-up is formed by strain gauges.

12. A chuck according to claims 1 to 11 characterised in that, with the clamping jaws (2) being of a split configuration and being releasably and displaceably connected together by a coupling portion (14), the clamping force measuring pick-up (3) detects the flow of force at the coupling portion (14).

13. A chuck according to claim 12 characterised in that the clamping force measuring pick-up (3) is arranged in a recess at the peripheral surface of the coupling portion (14).

14. A chuck according to one of claims 1 to 13 characterised in that the signal evaluation means forms a signal which reproduces the actual clamping force at the clamping jaw (2) and makes it available for use in controlling the turning machine driving the chuck.

1/5

Fig. 1

2/5

Fig. 2

3/5

Fig. 3

Fig. 4

Fig. 5

Fig. 6

5/5

Fig. 7